# EUROPÄISCHE PATENTSCHRIFT

(11) **EP 1 260 416 B1**
(45) Veröffentlichungstag und Bekanntmachung des Hinweises auf die Patenterteilung: **27.09.2006**
(21) Anmeldenummer: 02010266.1
(22) Anmeldetag: 17.05.2002
(51) Int. Cl.: B60R 21/20, B60Q 5/00

(54) **Gassackmodul und Fahrzeuglenkrad mit Gassackmodul**
Airbag module and associated vehicle steering wheel
Module de coussin de sécurité et volant de véhicule correspondant

(30) Priorität: 22.05.2001 DE 20108596 U
(43) Veröffentlichungstag der Anmeldung: 27.11.2002
(73) Patentinhaber: TRW Automotive Safety Systems GmbH, 63743 Aschaffenburg (DE)
(72) Erfinder: Heindl, Ralf, 63743 Aschaffenburg (DE)
(74) Vertreter: Kitzhofer, Thomas

(56) Entgegenhaltungen:
- WO-A-98/02337
- DE-C- 4 430 588
- GB-A- 2 309 123

## Beschreibung

Die Erfindung betrifft ein Gassackmodul nach dem Oberbegriff des Anspruchs 1. Darüber hinaus betrifft die Erfindung ein Fahrzeuglenkrad mit einem erfindungsgemäßen Gassackmodul.

Gattungsgemäße Gassackmodule werden auch als "Floating horn-Module" bezeichnet, denn sie sind am Lenkrad axial verschieblich gelagert. Auf der Rückseite des Moduls ist üblicherweise ein erster Schaltkontakt und auf der Nabenplatte des Lenkrads ein zweiter Schaltkontakt angebracht, die bei Verschiebung des Moduls aus einer Ausgangsstellung in eine Stellung zur Hupenbetätigung einander berühren. Zur Rückstellung des Moduls ist rückseitig zwischen dem Modul und dem Lenkrad wenigstens eine Rückstellfeder vorgesehen.

Die gattungsbildende WO 98/02337 A zeigt eine Schaltereinheit mit vier Schaltern, die zwischen einem Gassackmodul und einer unteren Platte eines Lenkrades angeordnet ist. Beim Verschieben des Gassackmoduls wird eine Hupe betätigt.

In der GB-A-2 309 123 sind Schalter gezeigt, die an einem Bauteil angebracht sind, das einen Gasgenerator trägt. Bei einer Verschiebung des Bauteils in Nabenrichtung wird eine Hupe ausgelöst.

Die Erfindung schafft ein Gassackmodul, das sich durch eine geräuscharme Schaltbetätigung und wenig Einzelteile sowie eine einfache Montage auszeichnet. Dies wird bei einem Gassackmodul mit den Merkmalen des Anspruchs 1 erreicht. Das erfindungsgemäße Gassackmodul hat keinen gewöhnlichen Schalter, sondern ein mit einem Hupenschalter ausgestattetes Hohlprofil, in dem beispielsweise Abschnitte elektrisch leitend sind, die beim Zusammendrücken des Hohlprofils miteinander in Kontakt kommen. Auch können beispielsweise im Inneren des Hohlprofils an gegenüberliegenden Abschnitten Kontaktleiter angebracht oder in das Hohlprofil integriert sein, die beim Zusammendrücken des Hohlprofils durch Verschiebung des Moduls miteinander in Kontakt kommen. Durch die Integration der Kontaktelemente in das Hohlprofil ergibt sich auch ein Korrosionsschutz. Die Anzahl der zu montierenden Einzelteile wird verringert, denn das Hohlprofil bildet üblicherweise samt des integrierten Hupenschalters ein Einzelteil. Noch eine weitere Funktion kann das Hohlprofil übernehmen: nämlich eine Dichtfunktion. Rückseitig sollte aus dem Modul möglichst kein Gas, das in dem im Modul untergebrachten Gasgenerator erzeugt wird, ausströmen können. Vielmehr soll das gesamte erzeugte Gas in den Gassack strömen. Es sind deshalb aufwendige Abdichtungen auf der Rückseite des Moduls angedacht worden, die durch das Hohlprofil ersetzt werden. Das Hohlprofil ist nämlich so am oder im Modul angeordnet, daß es einen Spalt, über den das Gas aus dem Modul ausströmen könnte, abdichtet. Zu diesem Zweck erstreckt sich das Hohlprofil vorzugsweise ringförmig geschlossen an der Rückseite des Moduls.

Gemäß der bevorzugten Ausführungsform ist das Hohlprofil rückseitig am Modul angeordnet und so ausgebildet, daß es bestrebt ist, das Modul nach der Hupenbetätigung in eine Ausgangsstellung zurückzudrängen. Das bedeutet, das Hohlprofil übernimmt noch eine zusätzliche Funktion, indem es die bislang vorgesehene Rückstellfeder unterstützt oder, bevorzugt, vollständig ersetzt und allein die Rückstellung des Moduls gewährleistet.

In dem Hohlprofil kann beispielsweise ein Sensor, der den Hupenschalter bildet, angeordnet sein. Kontakte können im Hohlprofil befestigt oder in das Profil integriert sein, wie vorstehend bereits erläutert.

Das erfindungsgemäße Fahrzeuglenkrad hat einen Hupenschalter und insbesondere auch ein erfindungsgemäßes Gassackmodul. Zur Verringerung der zu montierenden Teile ist ein Hohlprofil als Elastomer mit dem Hupenschalter ausgestattet.

Wenn das erfindungsgemäße Gassackmodul vorgesehen ist, ist zwischen dem Modul und dem Lenkrad das Hohlprofil angeordnet. Darüber hinaus kann am Hohlprofil eine Dichtlippe sein, die am Lenkrad anliegt und die Dichtwirkung verbessert.

Eine andere Ausführungsform sieht vor, daß das Hohlprofil seitlich so geführt ist, daß eine Längsführung für das gesamte Modul geschaffen wird. Bei dieser Ausführungsform übernimmt das Hohlprofil eine weitere Funktion, nämlich eine Führungsfunktion in Längsrichtung, d.h. in Richtung der Achse des Lenkrads.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine schematische Querschnittsansicht durch ein erfindungsgemäßes Fahrzeuglenkrad mit einem erfindungsgemäßen Gassackmodul,
- Figuren 2 und 3 Querschnittsansichten verschiedener Ausführungsformen des beim erfindungsgemäßen Fahrzeugmodul eingesetzten Hohlprofils; und
- Figur 4 eine vergrößerte Querschnittsansicht durch einen Abschnitt des erfindungsgemäßen Moduls und des Lenkrads im Bereich eines Hohlprofils.

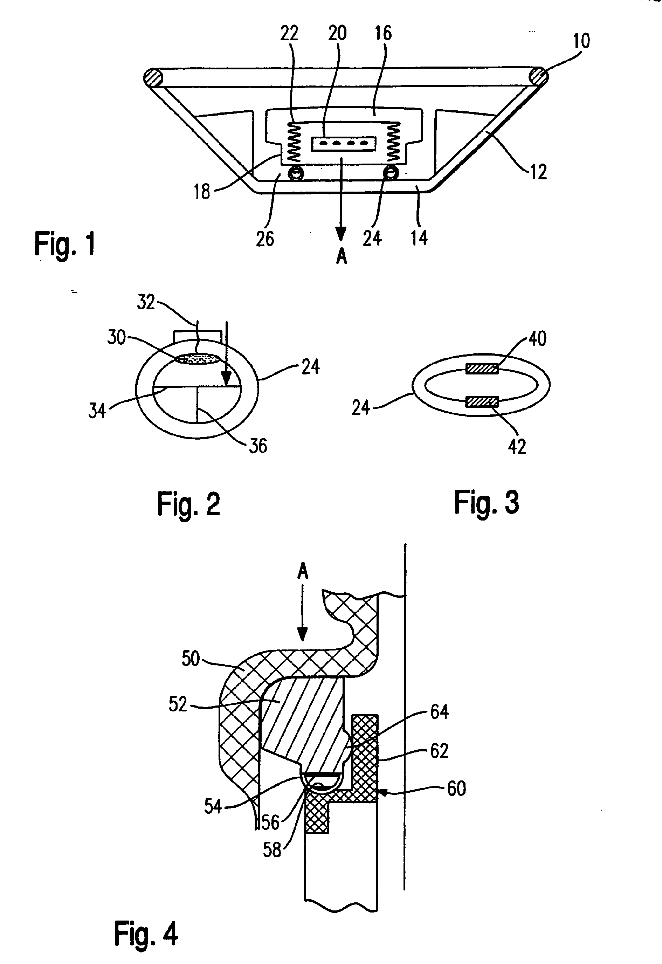

In Figur 1 ist ein Fahrzeuglenkrad dargestellt, das einen Lenkradkranz 10, Speichen 12 und eine Nabenplatte 14 aufweist. Im Bereich der Nabenplatte 14 ist direkt an der Nabenplatte 14 oder an nicht explizit gezeigten Befestigungsblechen ein Gassackmodul 16 befestigt. Das Gassackmodul 16 hat ein Gehäuse 18, in dem ein Gasgenerator 20 sowie ein Gassack 22, der vom Generator 20 aufgeblasen wird, untergebracht sind. Rückseitig ist am Gehäuse 18 ein Hohlprofil 24 befestigt, das im Querschnitt geschlossen ist und zwischen der Oberseite der Nabenplatte 14 und der Rückseite des Moduls 16 geklemmt wird. Das Hohlprofil ist in den Figuren 2 und 3 in verschiedenen Ausführungsformen dargestellt. Das Hohlprofil verläuft geschlossen ringförmig, so daß ein Spalt 26 zwischen der Rückseite des Moduls und der Nabenplatte 14 abgedichtet ist und Gas, das vom Gasgenerator 20 erzeugt und teilweise aus dem Modulgehäuse 18 rückseitig heraustritt, nicht zu großen Leckageverlusten führen kann, denn der Gasstrom wird durch das Hohlprofil 24 am Durchtritt durch den Spalt 26 gehindert.

Das Hohlprofil ist mit einem Hupenschalter ausgestattet, der dann betätigt wird, wenn das Modul in Richtung des Pfeiles A, d.h. in Richtung der Achse des Lenkrades vom Fahrer verschoben wird.

Im Hohlprofil 24 ist hierzu ein Sensor oder dergleichen befestigt oder der Sensor ist in es integriert. Gemäß Figur 2 ist innenseitig an einem Abschnitt eine Kontaktfläche 30 am Hohlprofil 24 befestigt (z.B. durch Kleben). Der Kontaktfläche 30 ist eine Kontaktleitung 32 zugeordnet. Im Inneren des Hohlprofils ist ferner eine von der Kontaktfläche 30 im nicht betätigten Zustand beabstandete Kontaktfläche 34 mit einer zugehörigen Leitung 36 befestigt. Wird das Modul in Richtung des Pfeiles A verschoben, wird das elastische Hohlprofil 24 zusammengedrückt (siehe Pfeil in Figur 2), so daß die Kontaktflächen 30, 34 einander berühren und ein Stromkreis geschlossen wird, was zur Aktivierung der Hupe führt.

Das Hohlprofil 24 hat eine solche Elastizität, daß es nach der Hupenbetätigung das gesamte Modul 16 zurück in die unbetätigte Stellung, d.h. die Ausgangsstellung drückt. Zusätzliche Rückstellfedern können deshalb entfallen.

Die Integration des Hupenschalters in das Hohlprofil kann auch wie in Figur 3 erfolgen. Bei dieser Ausführungsform sind innenseitig an den gegenüberliegenden oberen und unteren Abschnitten in das Elastomer Kontaktbänder 40, 42 integriert, z.B. durch teilweises Umspritzen, wobei die Kontaktbänder ebenfalls durch Zusammendrücken des Hohlprofils 24 miteinander in Kontakt kommen.

Bei der Ausführungsform nach Figur 4 ist das Hohlprofil auf einem rückseitigen Vorsprung 50 des Modulgehäuses 18 befestigt. Das Hohlprofil hat einen relativ massiven Abschnitt 52, der an seinem unteren Ende den Hohlprofilabschnitt 54 angeformt hat. Das Hohlprofil hat dabei eine halbkreisförmige Gestalt. Die Kontaktflächen sind mit 56 und 58 bezeichnet. Ein zusätzlicher Dichtring 60 ist lenkradseitig befestigt, wobei der Ring eine umlaufende Wand 62 besitzt, an deren Innenseite ein Vorsprung, der einerseits als Dichtlippe 64 fungiert und andererseits als Führungsfläche, denn die Dichtlippe 64 bewegt sich bei einer Verschiebung des Moduls in Richtung des Pfeiles A nach unten, an der Innenseite der Wand 62 entlang, wodurch das Modul eine Längsführung erhält.

Alternativ könnte das Hohlprofil beim erfindungsgemäßen Lenkrad auch unterhalb einer Hupenfläche angeordnet sein, die nicht durch das Modul bereitgestellt wird, sondern seitlich am Modul angeordnet ist. Auch bei dieser Ausführungsform würde das Hohlprofil den Hupenschalter aufweisen und für die Rückstellung des Schalters sorgen.

## Patentansprüche

1. Gassackmodul, das in ein Lenkrad integriert und relativ zum Lenkrad zur Hupenbetätigung verschiebbar ist, mit
einem am Modul (16) vorgesehenen Hupenschalter, der bei Verschiebung des Moduls (16) in eine die Hupenaktivierung herbeiführende Schalterstellung überführt wird,
**dadurch gekennzeichnet,**
**daß** ein Hohlprofil aus Elastomer vorgesehen ist, das mit dem Hupenschalter ausgestattet ist und am Modul (16) anliegt, und
**daß** das Hohlprofil (24) so am oder im Modul (16) angeordnet ist, daß es einen Spalt (26), über den Gas von einem Gasgenerator (20) ausströmen könnte, abdichtet.

2. Gassackmodul nach Anspruch 1, **dadurch gekennzeichnet, daß** das Hohlprofil (24) rückseitig am Modul (16) angeordnet und so ausgebildet ist, daß es bestrebt ist, das Modul (16) nach der Hupenbetätigung in eine Ausgangsstellung zurückzudrängen.

3. Gassackmodul nach Anspruch 2, **dadurch gekennzeichnet, daß** die Rückstellung des Moduls (16) in die Ausgangsstellung durch das Hohlprofil (24) erfolgt.

4. Gassackmodul nach einem der vorhergehenden Ansprüche, **dadurch gekennzeichnet, daß** in dem Hohlprofil (24) ein Sensor, der den Hupenschalter bildet, angeordnet ist.

5. Gassackmodul nach einem der vorhergehenden Ansprüche, **dadurch gekennzeichnet, daß** das Hohlprofil (24) mit Kontakten (30, 34; 40, 42; 56, 58) versehen ist, die am Hohlprofil (24) befestigt oder in es integriert sind.

6. Fahrzeuglenkrad mit einem Hupenschalter und einem Gassackmodul nach einem der vorhergehenden Ansprüche, wobei ein Hohlprofil (24) aus Elastomer mit dem Hupenschalter ausgestattet ist.

7. Fahrzeuglenkrad nach Anspruch 6, **dadurch gekennzeichnet, daß** das Hohlprofil (24) zwischen dem Modul und dem Lenkrad angeordnet ist.

8. Fahrzeuglenkrad nach Anspruch 6 oder 7, **dadurch gekennzeichnet, daß** am Hohlprofil (24) eine Dichtlippe (64) vorgesehen ist.

9. Fahrzeuglenkrad nach einem der Ansprüche 6 bis 8, **dadurch gekennzeichnet, daß** das Hohlprofil (24) seitlich so geführt ist, daß eine Längsführung für das Modul (16) geschaffen ist.

## Claims

1. An airbag module that is integrated into a steering wheel and that can be moved relative to the steering wheel in order to actuate the horn, comprising
a horn switch that is provided on the module (16) and which, when the module (16) is moved, is transferred into a switching position that causes the horn to be activated,
**characterized in that**
a hollow profile made of elastomer is provided which is equipped with the horn switch and lies against the module (16), and
that the hollow profile (24) is arranged on or in the module (16) in such a way that it seals off a gap (26) through which gas from a gas generator (20) could escape.

2. The airbag module according to Claim 1, **characterized in that** the hollow profile (24) is arranged on the rear side of the module (16) and is configured in such a way that it strives to push the module (16) back into its original position after the horn has been actuated.

3. The airbag module according to Claim 2, **characterized in that** the module (16) is reset to the original position by means of the hollow profile (24).

4. The airbag module according to any of the preceding claims, **characterized in that** a sensor that forms the horn switch is arranged in the hollow profile (24).

5. The airbag module according to any of the preceding claims, **characterized in that** the hollow profile (24) is provided with contacts (30, 34; 40, 42; 56, 58) that are attached to or integrated into the hollow profile (24).

6. A vehicle steering wheel comprising a horn switch and an airbag module according to any of the preceding claims, a hollow profile (24) made of elastomer being equipped with the horn switch.

7. The vehicle steering wheel according to Claim 6, **characterized in that** the hollow profile (24) is arranged between the module and the steering wheel.

8. The vehicle steering wheel according to Claim 6 or 7, **characterized in that** a sealing lip (64) is provided on the hollow profile (24).

9. The vehicle steering wheel according to any of Claims 6 to 8, **characterized in that** the hollow profile (24) is laterally guided in such a way that a lengthwise guidance is created for the module (16).

## Revendications

1. Module de coussin à gaz qui est intégré dans un volant de direction et déplaçable par rapport au volant de direction pour actionner un klaxon, comportant
un commutateur de klaxon prévu sur le module (16), qui est amené dans une position de commutateur provoquant l'activation du klaxon lors du déplacement du module (16),
**caractérisé en ce que**
il est prévu un profil creux en élastomère qui est équipé du commutateur de klaxon et qui est en appui sur le module (16), et
**en ce que** le profil creux (24) est agencé sur ou dans le module (16) de telle sorte qu'il étanche une fente (26) via laquelle du gaz pourrait s'échapper d'un générateur de gaz (20).

2. Module de coussin à gaz selon la revendication 1, **caractérisé en ce que** le profil creux (24) est agencé sur la face postérieure du module (16) et réalisé de telle sorte qu'il tend à repousser le module (16) dans une position initiale après l'actionnement du klaxon.

3. Module de coussin à gaz selon la revendication 2, **caractérisé en ce que** la remise du module (16) dans la position initiale est effectuée par le profil creux (24).

4. Module de coussin à gaz selon l'une des revendications précédentes, **caractérisé en ce que** dans le profil creux (24) est agencé un capteur qui constitue le commutateur de klaxon.

5. Module de coussin à gaz selon l'une des revendications précédentes, **caractérisé en ce que** le profil creux (24) est pourvu de contacts (30, 34 ; 40, 42; 56, 58) qui sont fixés sur le profil creux (24) ou qui sont intégrés dans celui-ci.

6. Volant de direction de véhicule comportant un commutateur de klaxon et un module de coussin à gaz selon l'une des revendications précédentes, dans lequel un profil creux (24) en élastomère est équipé du commutateur de klaxon.

7. Volant de direction de véhicule selon la revendication 6, **caractérisé en ce que** le profil creux (24) est agencé entre le module et le volant de direction.

8. Volant de direction de véhicule selon la revendication 6 ou 7, **caractérisé en ce qu'**une lèvre d'étanchéité (64) est prévue sur le profil creux (24).

9. Volant de direction de véhicule selon l'une des revendications 6 à 8, **caractérisé en ce que** le profil creux (24) est guidé latéralement de telle sorte qu'un guidage longitudinal est créé pour le module (16).
